Europäisches Patentamt

**European Patent Office**

Office européen des brevets

(11) Veröffentlichungsnummer: **0 238 881 B1**

# EUROPÄISCHE PATENTSCHRIFT

(12)

(45) Veröffentlichungstag der Patentschrift: **19.06.91**

(21) Anmeldenummer: **87102766.0**

(22) Anmeldetag: **26.02.87**

(51) Int. Cl.⁵: **B01J 23/84**, B01J 37/00, B01D 53/36

(54) **Katalysator zur Beseitigung umweltschädlicher Bestandteile der Abgase von Verbrennungsmotoren.**

(30) Priorität: **27.02.86 DE 3606335**

(43) Veröffentlichungstag der Anmeldung:
**30.09.87 Patentblatt 87/40**

(45) Bekanntmachung des Hinweises auf die
Patenterteilung:
**19.06.91 Patentblatt 91/25**

(84) Benannte Vertragsstaaten:
**AT DE ES FR GB IT NL SE**

(56) Entgegenhaltungen:
**DE-A- 2 023 813     DE-A- 2 058 264
FR-A- 2 161 709     GB-A- 355 308
US-A- 3 907 716     US-A- 3 956 189**

(73) Patentinhaber: **Berger, Ulf-Michael
Drenker Strasse 29a
W-3472 Beverungen(DE)**

Patentinhaber: **Berger, Volker
Abgunstweg 14
W-3472 Beverungen(DE)**

(72) Erfinder: **Berger, Ulf-Michael
Drenker Strasse 29a
W-3472 Beverungen(DE)**
Erfinder: **Berger, Volker
Abgunstweg 14
W-3472 Beverungen(DE)**

(74) Vertreter: **Spalthoff, Adolf, Dipl.-Ing.
Pelmanstrasse 31 Postfach 34 02 20
W-4300 Essen 1(DE)**

## Beschreibung

Die Erfindung betrifft einen Katalysator zur Beseitigung umweltschädlicher Bestandteile der Abgase von Verbrennungsmotoren, insbesondere Otto-Motoren, unter Verwendung von Trägermaterialien, die mit katalytisch wirksamen Metallverbindungen versehen sind.

Es ist bekannt, daß die Abgase von Verbrennungsmotoren umweltschädliche Bestandteile, wie CO, NOx, SO2 u.a. enthalten.

Um diese umweltschädlichen Bestandteile aus den Abgasen von Verbrennungsmotoren zu beseitigen, ist eine Vielzahl von Ausführungen für Katalysatoren verschiedenster Zusammensetzung vorgeschlagen worden. DE-A-2 058 264 offenbaut beispielsweise ein Verfahren zur Herstellung eines Katalysators sowie den Katalysator selbst. Nach der Lehre dieser Offenlegungsschrift finden als katalytisch wirksame Metallverbindungen 8 - 20 Gew.-% Kobaltoxid, 6 - 29 Gew.-% Manganoxid und 2 - 10 Gew. % Kupferoxid Verwendung, wobei als Trägermaterialien Magnesiumsilikat, Aluminiumsilikat sowie organische Substanzen dienen. Allen diesen bekannten Katalysatoren ist der Nachteil zu eigen, daß diese nicht mit verbleitem Benzin betrieben werden können, weil der Bleigehalt nach kürzester Zeit zur Vernichtung der Katalysatoren führt. Aus diesem Grunde geht die Tendenz dahin, unverbleites Benzin zu verwenden, welches jedoch nicht von allen am Markt befindlichen Motorausführungen vertragen wird, insbesondere nicht von vergaserbestückten Motoren.

Von diesem Stand der Technik ausgehend liegt der Erfindung die Aufgabe zugrunde, unter Vermeidung vorerwähnter Nachteile ein Verfahren zur Herstellung eines Katalysators sowie einen Katalysator zur Beseitigung umweltschädlicher Bestandteile der Abgase von Verbrennungsmotoren zu schaffen, welches nicht nur in einfacher und kostengünstiger Weise durchführbar ist, sondern auch einen Katalysator ergibt, welcher die umweltschädlichen Bestandteile der Abgase weitgehend beseitigt, mit verbleitem Benzin betrieben werden kann und über vergleichsweise hohe Standzeiten verfügt.

Verfahrensgemäß wird diese Aufgabe dadurch gelöst, daß

ca. 22 - 26 Gew.-% Kobaltoxid,
ca. 8 - l5 Gew.-% Manganoxid,
ca. 4 - 6 Gew.-% Kupferoxid,
ca. 25 - 35 Gew.-% Ton,
ca. 27 - 35 GEw.-% Talkum (Vapor),

sämtliche Komponenten in Pulverform gemeinsam trocken vorgemischt und danach homogenisiert und auf die gewünschte Endfeinheit gebracht werden, daß daraufhin das Pulvergemisch in einem Mischer plastifiziert und über ein Passiersieb granuliert wird, daß danach das Verpressen in die gewünschte Form erfolgt, daß die gepreßten Formlinge bei etwa 50 - l50 Grad C getrocknet und daraufhin bei einer Temperatur von ca. 850 - 900 Grad C gebrannt werden. Die Herstellung des Katalysators gestaltet sich außerordentlich einfach, da lediglich ein Mischer und eine Presse erforderlich sind, wobei die eingesetzten Bestandteile vergleichsweise preisgünstig sind. Die Vormischung der einzelnen Bestandteile erfolgt in einem Zwangsmischer, so daß eine innige Vermischung der einzelnen Bestandteile sichergestellt ist. Als Ton findet vorzugsweise Warenburger Ton Verwendung, welcher das eigentliche Trägermaterial des Katalysators darstellt, wohingegen das Talkum die Porosität bewirkt. Durch den Brennvorgang wird ein Katalysator hoher Festigkeit erzeugt mit keramikähnlichen Eigenschaften, so daß sich vergleichsweise hohe Standzeiten ergeben.

Die Homogenisierung und Erzielung der gewünschten Endfeinheit wird mittels einer Gegenstromprallmühle durchgeführt.

Es ist auch möglich, lediglich etwa 50 Gew.% des vorgemischten Materials in die Homogenisierung zu geben und diesen Teil daraufhin wieder mit den anderen etwa 50 Gew.-% der Vormischung zusammenzubringen, so daß sich eine gewisse Porigkeit ergibt und damit eine vergleichsweise große aktive Oberfläche.

Die Plastifizierung der Vormischung wird durch Zusatz von Öl und destilliertem Wasser, vorzugsweise von Formöl und einer Emulsion von Formöl und destilliertem Wasser, durchgeführt. Die Feuchtigkeit der plastifizierten Katalysatormasse beträgt ca. 40 - 50 %, vorzugsweise 42 -46 %. Es hat sich gezeigt, daß dieser Feuchtigkeitsgehalt sich sehr vorteilhaft auf die weitere Verarbeitung der Katalysatormasse auswirkt.

Das Verpressen der so aufbereiteten Katalysatormasse erfolgt mit Hilfe einer Stahlmatrize auf einem Naßpreßautomaten, so daß vergleichsweise große Stückzahlen in kurzer Zeit herstellbar sind. Vorteilhaft wird gleichzeitig mit dem Verpressen das Einbringen einer Vielzahl von den Formling in Strömungsrichtung der Abgase gesehen von seiner Vorderseite zu seiner Rückseite durchsetzenden Kanälen durchgeführt. Zu diesem Zwecke ist die Oberteilaufnahme der Presse mit einer Vielzahl von frei vorragenden Nadeln ausgerüstet, welche beim Zusammenfahren von Ober- und Unterteil die Katalysatormasse durchsetzen und dabei die Durchtrittskanäle ausbilden. Es ist jedoch auch möglich, die Durchtrittskanäle nachträglich durch Bohren, Stanzen, Drücken usw. einzubringen. Auch können in die Katalysatormasse Fäden od.dgl. eingelegt werden, welche beim abschließenden Brennvorgang vernichtet werden, so daß sich die gewünschten Durchtrittskanäle ausbilden.

Die Trocknung der gepreßten Formlinge wird vorzugsweise bei einer Temperatur von ca. l00 - l20 Grad C durchgeführt.

Die Trocknungszeit der Katalysatormasse beträgt ca. 60 min. Die Brennzeit macht ca. 90 min aus. Nach dem Brennen findet eine Abkühlung in ca. 7 - 8 Stunden auf eine Temperatur von ca. 80 Grad C statt.

Ein Verfahren zur Herstellung eines Katalysators ist dadurch gekennzeichnet daß

ca. 22 - 26 Gew.-% Kobaltoxid,
ca. 8 - l5 Gew.-% Manganoxid,
ca. 4 - 6 Gew.-% Kupferoxid,
ca. 25 - 35 Gew.-% Ton,
ca. 27 - 35 Gew.-% Talkum (Vapor),

sämtliche Komponenten in Pulverform gemeinsam trocken vorgemischt und danach homogenisiert und auf die gewünschte Endfeinheit gebracht werden, daß daraufhin das Pulvergemisch in einem Mischer plastifiziert und danach stranggezogen wird, der Strang auf die gewünschte Größe der Formlinge abgelängt und die Formlinge bei etwa 50 - l50 Grad C getrocknet und daraufhin bei einer Temperatur von ca. 850 - 900 Grad C gebrannt werden. Die Formlinge werden nach ihrem Abtrennen mit einer Vielzahl von die Formlinge in Strömungsrichtung der Abgase gesehen von ihren Vorderseiten zu ihren Rückseiten durchsetzenden Kanälen versehen, was beispielsweise durch Bohren, Stanzen, Drücken usw. erfolgen kann.

Die Trocknungszeit, Brennzeit sowie die Zeit für die Abkühlung sind die gleichen wie eingangs bereits angegeben.

Um einen Katalysator zu schaffen, welcher nach dem Kaltstart möglichst schnell seine günstigste Betriebstemperatur erreicht, wird erfindungsgemäß vorgeschlagen, daß der pulverförmigen Vormischung als zusätzliche, katalytisch hochwirksame Komponente ca. 0,5 Gew.-% Palladium- und/oder Rhodium- und/oder Platin-Chlorid in wässriger Lösung zugesetzt wird. Durch diese Bestandteile erhöht sich das Ansprechverhalten, so daß der Katalysator schon nach vergleichsweise kurzer Zeit in seinem günstigsten Wirkungsbereich arbeitet.

Bei den durch Strangziehen hergestellten Katalysatoren ist es möglich, deren Oberfläche mit einer hochwirksamen katalytischen, wässrigen Lösung aus Palladium- und/oder Rhodium-und/oder Platin-Chlorid zu behandeln, beispielsweise durch Tauchen, Besprühen usw.

Das Auf- bzw. Einbringen der zusätzlichen katalytisch hochwirksamen Bestandteile in Form von wässrigen Lösungen kann vor oder nach der Wärmebehandlung durch Tauchen, Injizieren od.dgl. durchgeführt werden. Es ist auch möglich, gleichzeitig durch Vakuum die in den Poren und/oder Kanälen vorhandene Luft zu entziehen und die katalytisch wirksame Lösung in diese Hohlräume einzulagern.

Die Feinheit des eingesetzten Talkums beträgt nach Hegmann 6. Die Feinheit des eingesetzten Talkums weist eine max. Korngröße von 20 $\mu$m auf, wobei 97 Gew.-% eine Korngröße unter l0 $\mu$m und 50 Gew.-% eine Korngröße unter 2 $\mu$m besitzen.

Das zugesetzte Tonmehl hat eine Feinheit von max. 90 $\mu$m bei folgender Korngrößenverteilung:

+ 200 mesh 0,l %
- 200 mesh 99,9 %
- 400 mesh 99,0 %.

Das zugesetzte Kupferoxid besitzt einen Rückstand von max. 2 Gew.-% auf 0,063 mm/Maschenweite.

Das eingesetzte Manganoxid hat eine Feinheit von 90 % din l20 = 0,045 mm.

Die Erfindung erstreckt sich weiterhin auf einen Katalysator zur Beseitigung umweltschädlicher Bestandteile der Abgase von Verbrennungsmotoren, welcher aus Trägermaterialien besteht, die mit katalytisch wirksamen Metallverbindungen versehen sind.

Der Katalysator derart aufgebaut, daß dieser

ca. 22 - 26 Gew.-% Kobaltoxid,
ca. 8 - l5 Gew.-% Manganoxid,
ca. 4 - 6 Gew.-% Kupferoxid,
ca. 25 - 35 Gew.-% Ton und
ca. 27 - 35 Gew.-% Talkum (Vapor)

aufweist. Aufgrund dieser seiner Zusammensetzung erweist sich der Katalysator als außerordentlich standfest, so daß die an einen derartigen Katalysator aufgrund behördlicher Auflagen gestellten Forderungen in vollem Umfange erfüllt werden. Außerdem ist der Katalysator unempfindlich gegen Blei, so daß der zugehörige Verbrennungsmotor auch mit verbleitem Benzin betrieben werden kann, was insbesondere für die Nachrüstung von ganz erheblicher Bedeutung ist.

Als besonders vorteilhaft haben sich Katalysatoren mit nachstehend angegebener Zusammensetzung erwiesen:

Beispiel l:

243,l3 Gewichtsteile Kobaltoxid,
l4l,73 Gewichtsteile Manganoxid,
54,3l Gewichtsteile Kupferoxid,
264,66 Gewichtsteile Ton und
296,l6 Gewichtsteile Talkum (Vapor)-

Beispiel 2:

244,3l Gewichtsteile Kobaltoxid,
l42,73 Gewichtsteile Manganoxid,
55,3l Gewichtsteile Kupferoxid,
263,l6 Gewichtsteile Ton und
294,66 Gewichtsteile Talkum (Vapor).

Für das Ansprechverhalten des Katalysators, insbesondere nach einem Kaltstart, ist es vorteilhaft, diesem bereits bei der Bereitung der Ausgangsmischung ca. 0,5 Gew.-% Palladium- und/oder Rhodium- und/oder Platin-Chlorid in wässriger Lösung zuzusetzen, oder die Formlinge vor der Wärmebehandlung oder die fertigen Katalysatoren mit einer derartigen Lösung zu behandeln.

Die erfindungsgemäßen Katalysatoren gleich welcher Zusammensetzung sind vorzugsweise mit einer Vielzahl von Durchtrittskanälen ausgerüstet, die diese in Strömungsrichtung der Abgase gesehen von ihren Vorder- zu ihren Rückseiten durchsetzen. Auf diese Weise ergibt sich eine vergleichsweise große, katalytisch wirksame Oberfläche mit der Folge der Erzielung eines sehr hohen Wirkungsgrades.

Die Durchtrittskanäle sind sämtlich oder zum Teil mit einem Innengewinde nach Art eines gezogenen Gewehrlaufes versehen. Durch diese Innengewinde erhalten die Abgase einen Drall und damit eine längere Verharrungszeit im Katalysator, so daß die Wirksamkeit weiter erhöht wird. Das Einbringen der Innengewinde kann beispielsweise mit mit Außengewinde versehenen Nadeln erfolgen, welche an ihren einen Enden drehbar gelagert sind, so daß sich beim Herausziehen der Nadeln nach Herstellen der Durchtrittskanäle diese zu drehen vermögen und dabei eine Ziehung der Innengewinde bewirken.

Vorteilhaft sind die Ein- und/oder Austrittsöffnungen der Kanäle trichterförmig erweitert. Bei den Eingangsöffnungen führt dieses zu einer Vergrößerung der wirksamen Oberflächen, während bei den Ausgangsöffnungen die Entspannungswirkung früher einsetzt, so daß insgesamt die Wirksamkeit des Katalysators weiter verbessert wird.

Durch die Verwendung von Talkum (Vapor) ergibt sich eine gewisse Porosität, welche das Durchströmen der Abgase ermöglicht. Um die Durchströmverhältnisse optimal zu gestalten, findet bevorzugt der Katalysator mit den Durchtrittskanälen Verwendung, da diese ohne weitgehende Verlangsamung von den Abgasen durchströmt werden können und dennoch die gewünschte katalytische Wirkung erzielt wird.

Die erfindungsgemäßen Katalysatoren können einstückig ausgebildet sein. Als besonders vorteilhaft erweist es sich jedoch, diese scheibenförmig zu gestalten, da dann mit nur einem Werkzeug Katalysatoren für alle in Frage kommenden Motortypen herstellbar sind. Zu diesem Zwecke können mehrere Scheiben zu einem Gesamtkatalysator verbunden sein, beispielsweise unter Verwendung eines hochhitzebeständigen Klebers, beispielsweise für Temperaturen von 1500 - 1600 Grad C. Bei einem derartigen Kleber handelt es sich um sog. Keramikkleber.

Gemäß einem weiteren Merkmale der Erfindung weist der Katalysator bzw. weisen die Scheiben desselben an seiner bzw. ihren in Strömungsrichtung der Angase gesehenen Rückseite einen gegenüber der Rückseite bzw. der Rückseiten vorragenden Rand auf. Durch diesen Rand bzw. die Ränder werden Nachentspannungskammern geschaffen, die die Strömungsverhältnisse günstig beeinflussen und insbesondere ein zu schnelles Durchströmen der Abgase durch die Poren, Kapillaren, Durchtrittskanäle usw. verhindern.

Um sicherzustellen, daß der Katalysator während des Betriebes in seinem günstigsten Temperaturbereich liegt, ist dieser auf seiner äußeren Umfläche von einer Matte aus hochhitzebeständigem Material umgeben. Hierzu eignet sich besonders eine Cerafeldmatte von beispielsweise 2 mm Stärke, welche bis zu Temperaturen von 1600 Grad C voll wirksam ist. Ausserdem verhindert diese Isolationsmatte den Wärmeübergang auf benachbarte Teile des Kraftfahrzeuges, insbesondere die Auspuffanlage.

Je nach der Art der in den Kraftfahrzeugen verwendeten Motorausführungen und Anordnung des Katalysators kann es sich als für die Betriebsweise des Katalysators vorteilhaft erweisen, wenn diesem zusätzlich Luft zugeführt wird. Dieses geschieht durch Beaufschlagung der erfindungsgemäßen Katalysatoren mit Luft, die vorzugsweise in Abhängigkeit von der Motordrehzahl zugesetzt wird, so daß ein gewünschter Luftüberschuß bei allen Fahrzuständen sowie beliebiger Anordnung des Katalysators gewährleistet ist.

Durch die vorgesehene Scheibenform der einzelnen Katalysatoren zum Aufbau eines Gesamtkatalysators ist es möglich, Katalysatoren der verschiedenen erfindungsgemäßen Zusammensetzungen jeweils miteinaner zu kombinieren, um je nach Motortyp den dazu optimalen Katalysator zu schaffen.

Ein Ausführungsbeispiel der Erfindung ist an Hand der Zeichnung näher erläutert, und zwar zeigt:

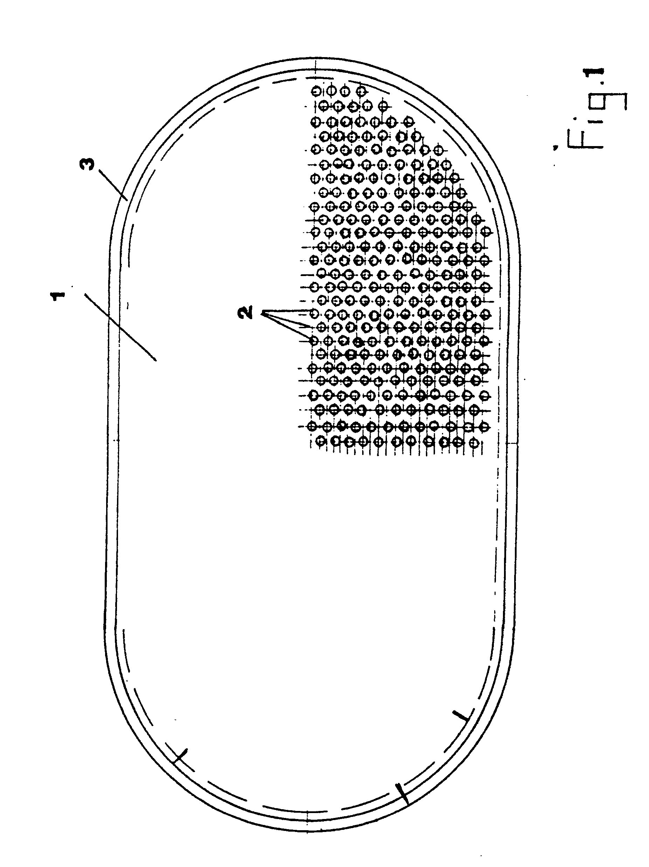

Figur 1   eine Draufsicht des Katalysators und
Figur 2   eine geschnittene Seitenansicht.

Mit 1 ist eine Katalysatorscheibe bezeichnet, welche ovale Grundform besitzt und mit einer Vielzahl von Durchtrittskanälen 2 ausgerüstet ist. Der Einfachheit halber sind die Durchtrittskanäle 2 nur in einem Viertel der Darstellung des Katalysators eingezeichnet. Der Rand des Katalysators ist mit 3 bezeichnet.

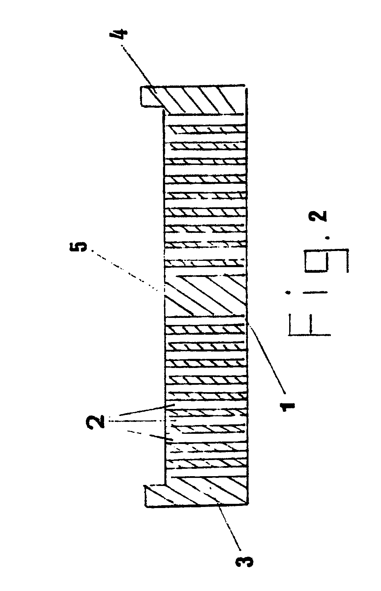

Wie insbesondere aus Figur 2 ersichtlich, ist der Rand 3 des Katalysators 1 gegenüber seiner in Strömungsrichtung gesehenen Rückseite kragenartig vorstehend ausgebildet, wie mit 4 bezeichnet ist. Innerhalb des kragenartig vorstehenden Randes 4 bildet sich eine Nachentspannungskammer 5 aus, welche zur Verbesserung der Strömungsverhältnisse der durchtretenden Abgase beiträgt, insbesondere dann, wenn mehrere der aus Figur 2 ersichtlichen Katalysatorscheiben zu einem Gesamtkatalysator zusammengefügt sind. Bei einem so gebildeten Gesamtkondensator treten über dessen Länge immer wieder Entspannungskammern 5 auf.

Die ovale Ausgestaltung des Katalysators I erweist sich für die Unterbringung unterhalb des Bodens eines Kraftfahrzeuges oder in dessen Motorraum als besonders günstig.

**Ansprüche**

1. Katalysator zur Beseitigung umweltschädlicher Bestandteile der Abgase von Verbrennungsmotoren, welcher aus Trägermaterialien besteht, die mit Kobaltoxid, größer als 8 Gew.-%, Manganoxid, größer als 6 Gew.-%, Kupferoxid, größer als 2 Gew.-% und Edelmetallchloriden als katalytisch wirksamen Bestandteilen versehen sind, wobei dessen Bestandteile in Pulverform homogen gemischt sind, das Gemisch stranggezogen ist und von dem gebildeten Formling Monolithen gewünschter Länge abgeteilt sind, welche getrocknet und gebrannt sind, dadurch gekennzeichnet, daß dieser

    ca. 22 - 26 Gew.-% Kobaltoxid,
    ca. 8 - 15 Gew.-% Manganoxid,
    ca. 4 - 6 Gew.-% Kupferoxid,
    und als Trägermaterialien
    ca. 25 - 35 Gew.-% Ton und
    ca. 27 - 35 Gew.-% Talkum (Vapor)
    aufweist.

2. Katalysator nach Anspruch 1, dadurch gekennzeichnet , daß dieser folgende Zusammensetzung besitzt:

    243,13 Gewichtsteile Kobaltoxid,
    141,73 Gewichtsteile Manganoxid,
    54,31 Gewichtsteile Kupferoxid,
    264,66 Gewichtsteile Ton und
    296,16 Gewichtsteile Talkum (Vapor),

3. Katalysator nach Anspruch 1, dadurch gekennzeichnet , daß dieser folgende Zusammensetzung besitzt:

    244,31 Gewichtsteile Kobaltoxid,
    142,73 Gewichtsteile Manganoxid,
    55,31 Gewichtsteile Kupferoxid,
    263,16 Gewichtsteile Ton und
    294,66 Gewichtsteile Talkum (Vapor).

4. Katalysator nach Anspruch 1 oder einem der vorhergehenden, dadurch gekennzeichnet , daß dieser

    ca. 22 - 26 Gew.-% Kobaltoxid,
    ca. 8 - 15 Gew.-% Manganoxid,
    ca. 4 - 16 Gew.-% Kupferoxid,
    ca. 0,5 Gew.% Palladium- und/oder Rhodium- und/oder Platin-chlorid,
    ca. 25 - 35 Gew.-% Ton und
    ca. 27 - 35 Gew.-% Talkum (Vapor)
    aufweist.

5. Katalysator nach Anspruch 1 oder einem der vorhergehenden, dadurch gekennzeichnet , daß dieser mit einer Vielzahl von Durchtrittskanälen (2) ausgerüstet ist, die diesen in Strömungsrichtung der Abgase gesehen von seiner Vorder- zu seiner Rückseite durchsetzen.

6. Katalysator nach Anspruch 5, dadurch gekennzeichnet , daß die Durchtrittskanäle (2) sämtlich oder zum Teil mit Innengewinden versehen sind.

7. Katalysator nach Anspruch 5 oder 6, dadurch gekennzeichnet , daß die Ein- und/oder Austrittsöffnungen der Kanäle (2) trichterförmig erweitert sind.

8. Katalysator nach Anspruch 1 oder einem der vorhergehenden, dadurch gekennzeichnet, daß dieser auf seiner äußeren Umfläche von der Matte aus hochhitzebeständigem Material umgeben ist.

9. Katalysator nach Anspruch 1 oder einem der vorhergehenden, dadurch gekennzeichnet, daß die Feinheit des eingesetzten Talkums nach Hegmann 6 beträgt.

10. Katalysator nach Anspruch 9, dadurch gekennzeichnet, daß die Feinheit des eingesetzten Talkums eine max. Korngröße von 20 $\mu$m beträgt, wobei 97 Gew.-% eine Korngröße unter 10 $\mu$m und 50 Gew.-% eine Korngröße unter 2 $\mu$m aufweisen.

11. Katalysator nach Anspruch 1 oder einem der vorhergehenden, dadurch gekennzeichnet, daß das zugesetzte Tonmehl eine Feinheit von max. 90 $\mu$m besitzt.

12. Katalysator nach Anspruch 1 oder einem der vorhergehenden, dadurch gekennzeichnet, daß das zugesetzte Kobaltoxid folgende Feinheit aufweist:

    + 200 mesh 0,1 %
    - 200 mesh 99,9 %
    - 400 mesh 99,0 %.

13. Katalysator nach Anspruch 1 oder einem der vorhergehenden, dadurch gekennzeichnet, daß das zugesetzte Kupferoxid einen Rückstand von max. 2 Gew.-% auf 0,063 mm/Maschenweite besitzt.

14. Katalysator nach Anspruch 1 oder einem der vorhergehenden, dadurch gekennzeichnet, daß 90 Gew.-% Manganoxid eine Feinheit von din 120 = 0,045 mm besitzen.

**Claims**

1. Catalytic converter for the removal of environmental pollutants contained in exhaust fumes from internal combustion engines, comprising carrier materials which are equipped with more than 8 weight per cent of cobalt oxide, more than 6 weight per cent of manganese oxide, more than two weight per cent of copper oxide and precious metal chlorides as catalytically effective components, wherein the components thereof are homogenously mixed in powder form, the mixture is extruded and monoliths of the desired length are cut from the extrusion, these being dried and burnt, characterised in that the catalytic converter has

   approx. 22 - 26 weight per cent of cobalt oxide
   approx. 8 - 15 weight per cent of manganese oxide
   approx. 4 - 6 weight per cent of copper oxide

   and, as carrier materials,

   approx. 25 - 35 weight per cent of clay and
   approx. 27 - 35 weight per cent of talc (vapour).

2. Catalytic converter according to claim 1, characterised in that it has the following composition:

   243.13 parts by weight of cobalt oxide
   141.73 parts by weight of manganese oxide
   54.31 parts by weight of copper oxide
   264.66 parts by weight of clay and
   296.16 parts by weight of talc (vapour).

3. Catalytic converter according to claim 1, characterised in that it has the following composition:

   244.31 parts by weight of cobalt oxide
   142.73 parts by weight of manganese oxide
   55.31 parts by weight of copper oxide
   263.16 parts by weight of clay and
   294.66 parts by weight of talc (vapour).

4. Catalytic converter according to claim 1 or one of the preceding claims, characterised in that it has

   approx. 22 - 26 weight per cent of cobalt oxide,
   approx. 8 - 15 weight per cent of manganese oxide,
   approx. 4 - 16 weight per cent of copper oxide,
   approx. 0.5 weight per cent of palladous and/or rhodium and/or platinum chloride
   approx. 25 - 35 weight per cent of clay and
   approx. 27 - 35 weight per cent of talc (vapour)

5. Catalytic converter according to claim 1 or one of the preceding claims, characterised in that it is equipped with a plurality of passage ducts (2), which, viewed in the direction of the flow of the exhaust gasses, penetrate the catalytic converter from the front to the rear.

6. Catalytic converter according to claim 5, characterised in that the passage ducts (2) are either completely or partially fitted with internal threads.

7. Catalytic converter according to claim 5 or 6, characterised in that the entry and/or exit apertures of the channels (2) are widened in a funnel-like manner.

8. Catalytic converter according to claim 1 or to one of the preceding claims, characterised in that the external circumference thereof is covered by a mat of material resistant to high temperatures.

9. Catalytic converter according to claim 1 or to one of the preceding claims, characterised in that the fineness of the added talc is 6 according to the Hegmann scale.

10. Catalytic converter according to claim 9, characterised in that the fineness of the added talc has a maximum grain size of 20 um, wherein 97 weight per cent has a grain size of less than 10 um and 50 weight per cent has a grain size of less than 2 um.

11. Catalytic converter according to claim 1 or one of the preceding claims, characterised in that the added cobalt oxide has a fineness of max. 90 um.

12. Catalytic converter according to claim 1 or one of the preceding claims, characterised in that the added cobalt oxide has the following fineness:

+ 200 mesh 0.1 %
- 200 mesh 99.9 %
- 400 mesh 99.0 %

13. Catalytic converter according to claim 1 or one of the preceding claims, characterised in that the added copper oxide has a residue of max. 2 weight per cent over a mesh width of 0.063mm.

14. Catalytic converter according to claim 1 or one of the preceding claims, characterised in that 90 weight per cent of manganese oxide has a fineness of DIN 120 = 0.045 mm.

## Revendications

1. Catalyseur pour l'élimination des constituants nuisibles pour l'environnement des gaz d'échappement des moteurs à combustion interne, qui est constitué par des matériaux supports comportant, en tant que constituants catalytiquement actifs, de l'oxyde de cobalt à raison de plus de 8% en poids, de l'oxyde de manganèse à raison de plus de 6% en poids, de l'oxyde de cuivre à raison de plus de 2% en poids et des chlorures de métal précieux, les constituants du catalyseur étant mélangés et homogénéisés sous forme de poudre, le mélange étiré en barreau et des monolithes de la longueur souhaitée séparés de l'aggloméré formé, monolithes qui sont séchés et calcinés, **caractérisé** en ce que ledit catalyseur présente :

   environ 22-26% en poids d'oxyde de cobalt,
   environ 8-15% en poids d'oxyde de manganèse,
   environ 4-6% en poids d'oxyde de cuivre,
   et, comme matériaux supports :
   environ 25-35% en poids d'argile et
   environ 27-35% en poids de talc (vapeur).

2. Catalyseur selon la revendication 1, **caractérisé** en ce qu'il possède la composition suivante :

   243,13 parties en poids d'oxyde de cobalt,
   141,73 parties en poids d'oxyde de manganèse,
   54,31 parties en poids d'oxyde de cuivre,
   264,66 parties en poids d'argile et
   296,16 parties en poids de talc (vapeur).

3. Catalyseur selon la revendication 1, **caractérisé** en ce qu'il possède la composition suivante :

   244,31 parties en poids d'oxyde de cobalt,
   142,73 parties en poids d'oxyde de manganèse,

   55,31 parties en poids d'oxyde de cuivre,
   263,16 parties en poids d'argile et
   294,66 parties en poids de talc (vapeur).

4. Catalyseur selon la revendication 1 ou l'une des revendications précédentes, **caractérisé** en ce qu'il présente :

   environ 22--26% en poids d'oxyde de cobalt,
   environ 8-15% en poids d'oxyde de manganèse,
   environ 4-16% en poids d'oxyde de cuivre,
   environ 0,5% en poids de chlorure de palladium
   et/ou de rhodium et/ou de platine,
   environ 25-35% en poids d'argile et
   environ 27-35% en poids de talc (vapeur).

5. Catalyseur selon la revendication 1 ou l'une des revendications précédentes, **caractérisé** en ce qu'il est muni de nombreux canaux traversants (2), qui traversent le catalyseur dans le sens d'écoulement des gaz d'échappement, les choses étant vues dans le sens allant de la face avant du catalyseur vers sa face arrière.

6. Catalyseur selon la revendication 5, **caractérisé** en ce que les canaux traversants (2) sont pourvus, entièrement ou partiellement, de filetages internes.

7. Catalyseur selon la revendication 5 ou 6, **caractérisé** en ce que les ouvertures d'entrée et/ou de sortie des canaux (2) s'élargissent en forme d'entonnoir.

8. Catalyseur selon la revendication 1 ou l'une des revendications précédentes, **caractérisé** en ce qu'il est entouré, sur sa périphérie, par un mat en matériau résistant aux températures élevées.

9. Catalyseur selon la revendication 1 ou l'une des revendications précédentes, **caractérisé** en ce que la finesse du talc utilisé atteint 6 . selon Hegmann.

10. Catalyseur selon la revendication 9, **caractérisé** en ce que la finesse du talc utilisé correspond à une taille de grain maximum de 20 $\mu$m, 97% en poids présentant une taille de grain inférieure à 10 $\mu$m et 50% en poids présentant une taille de grain inférieure à 2 $\mu$m.

11. Catalyseur selon la revendication 1 ou l'une des revendications précédentes, **caractérisé** en ce que la poudre d'argile ajoutée possède une finesse correspondant à une taille maxi-

mum de 90 $\mu$m.

12. Catalyseur selon la revendication 1 ou l'une des revendications précédentes, **caractérisé** en ce que l'oxyde de cobalt ajouté présente la finesse suivante :
+ 200 mesh 0,1%
- 200 mesh 99,9%
- 400 mesh 99,0%.

13. Catalyseur selon la revendication 1 ou l'une des revendications précédentes, **caractérisé** en ce que l'oxyde de cuivre ajouté présente un refus de au maximum 2% en poids au tamis de grandeur de maille 0,063 mm.

14. Catalyseur selon la revendication 1 ou l'une des revendications précédentes, **caractérisé** en ce que 90% en poids de l'oxyde de manganèse possède une finesse de 0,045 mm (din 120).

Fig.1

Fig. 2

EP 0 238 881 B1